# EUROPEAN PATENT SPECIFICATION

(11) **EP 3 266 266 B1**
(45) Date of publication and mention of the grant of the patent: **27.04.2022**
(21) Application number: 16707971.4
(22) Date of filing: 23.02.2016
(51) Int. Cl.: H04W 72/12, H04W 88/06, H04W 16/14

(54) **SCHEDULING OF RESOURCES ADAPTED TO ANOTHER NODE'S SCHEDULING INFORMATION IN THE CONTEXT OF VEHICULAR DECENTRALIZED COOPERATIVE COMMUNICATIONS**
AN KOORDINATIONSINFORMATIONEN EINES ANDEREN KNOTEN ADAPTIERTE RESSOURCENKOORDINATION IM KONTEXT VON DEZENTRALISIERTER KOOPERATIVER FAHRZEUGKOMMUNIKATION
PLANIFICATION DE RESSOURCES ADAPTÉE À DES INFORMATIONS DE PLANIFICATION D'AUTRE NOEUD DANS LE CONTEXTE DE COMMUNICATIONS COOPÉRATIVES DÉCENTRALISÉES ENTRE VÉHICULES

(30) Priority: 05.03.2015 US 201562128583 P
(43) Date of publication of application: 10.01.2018
(73) Proprietor: Telefonaktiebolaget LM Ericsson (publ), 164 83 Stockholm (SE)
(72) Inventor: SORRENTINO, Stefano, SE-171 68 Solna (SE); BLASCO SERRANO, Ricardo, SE-118 28 Stockholm (SE); DO, Hieu, SE-177 32 Järfälla (SE)
(74) Representative: Ericsson
(86) International application number: PCT/IB2016/050978
(87) International publication number: WO 2016/139555

(56) References cited:
- US-A1- 2008 139 212
- US-A1- 2010 041 388
- US-A1- 2010 322 287
- US-A1- 2013 343 283
- ZHENG KAN ET AL: "Heterogeneous Vehicular Networking: A Survey on Architecture, Challenges, and Solutions", IEEE COMMUNICATIONS SURVEYS & TUTORIALS, vol. 17, no. 4, 19 November 2015 (2015-11-19), pages 2377-2396, XP011590606, DOI: 10.1109/COMST.2015.2440103

## Description

### TECHNICAL FIELD

The present disclosure relates, in general, to wireless communications and, more particularly, to interference behavior detection.

### BACKGROUND

During Release 12, the LTE standard has been extended with support of device-to-device (D2D) (specified as "sidelink") features targeting both commercial and Public Safety applications. An example application enabled by Rel-12 LTE is device discovery, where devices are able to sense the proximity of another device and associated application by broadcasting and detecting discovery messages that carry device and application identities. Another example application is direct communication based on physical channels terminated directly between devices.

One of the potential extensions for the device-to-device work consists of support of V2x (vehicle-to-anything-you-can-imagine) communication, which includes any combination of direct communication between vehicles, pedestrians and infrastructure. V2x communication may take advantage of a network infrastructure, when available, but at least basic V2x connectivity should be possible even in case of lack of coverage. Providing an LTE-based V2x interface may be economically advantageous because of the LTE economies of scale, and it may enable tighter integration between communications with the network infrastructure (V2I), vehicle-to-pedestrian (V2P) communications, and vehicle-to-vehicle (V2V) communications, as compared to using a dedicated V2x technology.

V2x communications may carry both non-safety and safety information, where each of the applications and services may be associated with specific requirements sets (e.g., in terms of latency, reliability, capacity, etc.). ETSI has defined two types of messages for road safety: Co-operative Awareness Message (CAM) and Decentralized Environmental Notification Message (DENM).

The CAM message is intended to enable vehicles, including emergency vehicles, to notify their presence and other relevant parameters in a broadcast fashion. Such messages target other vehicles, pedestrians, and infrastructure, and are handled by their applications. CAM messages also serve as active assistance to safety driving for normal traffic. The availability of a CAM message is indicatively checked for every 100ms, yielding a maximum detection latency requirement of less than or equal to 100ms for most messages. However, the latency requirement for pre-crash sensing warning is 50ms.

The DENM message is event-triggered, such as by braking, and the availability of a DENM message is also checked for every 100ms. The requirement of maximum latency is less than or equal to 100ms.

The package size of CAM and DENM messages varies from 100+ to 800+ bytes, and the typical size is around 300 bytes. The message is supposed to be detected by all vehicles in proximity.

The Society of the Automotive Engineers (SAE) also defined the Basic Safety Message (BSM) for Dedicated Short Range Communications (DSRC) with various message sizes defined. According to the importance and urgency of the messages, the BSMs are further classified into different priorities.

Different approaches are possible for resource allocation for V2x messages transmission. One group of resource allocation techniques relies on a centralized approach where a controlling node (e.g., eNB) assigns individual resources to each user and possibly message. Another group of resource allocation techniques relies on the definition of a common pool of radio resources to be used for a certain purpose (e.g., V2x) and possibly a certain type of message. The pool(s) may be allocated by a central controller (e.g., the eNB). Devices access a common pool of radio resources in a contention based fashion. One way of increasing system level efficiency in the resource allocation procedure is to let the devices sense the resources used by other devices and perform resource allocation, trying to minimize mutual interference by prioritizing interference-free resources in the allocation.

For contention based resource allocation within a common pool of radio resources, resource sensing can be exploited to detect which resources are used at a certain point in time, and reduce interference by selecting resources accordingly. In this type of resource allocation, future resource selection is based on past observations of the interference scenario and the behavior by interfering devices. The future behavior of other devices, however, is in general unpredictable and the effectiveness of the resource allocation protocol is reduced.

US 2013/343283 discloses a wireless terminal selecting either a base station transmitter or a wireless terminal transmitter with which to communicate with based on the signal quality received from those transmitters.

US 2008/139212 discloses coordinating the transmission and reception of at least a first and second transceiver system of a mobile device.

Zheng KKan et al "Heterogeneous Vehicular Networking: A Survey on Architecture Challenges, and Solutions" IEEE COMMUNICATIONS SURVEYS & TUTORIALS vol 17 no 4 discloses major challenges and solutions that are related to both the Medium Access Control (MAC) and network layers in Heterogeneous Vehicular Networks.

US 2010/041388 discloses mobile terminals operating in either infrastructure mode or ad-hoc mode for performing communications.

### SUMMARY

To address the foregoing problems with existing approaches, disclosed is a transmission method in a first wireless device. The method may be described as in the appended claims.

Also disclosed is a first wireless device.

Certain embodiments of the present disclosure may provide one or more technical advantages. For example, certain embodiments may provide increased efficiency in resource utilization. As another example, certain embodiments may improve resource management of radio communication networks, and in particular resource management of communication networks with the participation of vehicles. As still another example, certain embodiments may advantageously protect user equipment using centralized resource allocation by avoiding interference with user equipment using centralized resource allocation. Other advantages may be readily apparent to one having skill in the art. Certain embodiments may have none, some, or all of the recited advantages.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates network;
FIGURE 2 illustrates an example in which different wireless devices may implement different resource allocation strategies without the use of side information;
FIGURE 3 illustrates an example in which different wireless devices may implement different resource allocation strategies with the use of side information;
FIGURE 4 illustrates an example in which different wireless devices are scheduled in overlapping or common sets of resources without the use of side information;
FIGURE 5 illustrates an example in which different wireless devices are scheduled in overlapping or common sets of resources with the use of side information;
FIGURE 6 illustrates a signal flow diagram;
FIGURE 7 is a flow diagram of a method in a first wireless device, in accordance with certain embodiments;
FIGURE 8 is a flow diagram of a method in a node;
FIGURE 9 is a block schematic of an exemplary wireless device, in accordance with certain embodiments;
FIGURE 10 is a block schematic of an exemplary network node;
FIGURE 11 is a block schematic of an exemplary radio network controller or core network node;
FIGURE 12 is a block schematic of an exemplary wireless device, in accordance with certain embodiments; and
FIGURE 13 is a block schematic of an exemplary network node.

### DETAILED DESCRIPTION

As described above, devices accessing a common pool of radio resources (which may be interchangeably referred to as resources) in a contention based fashion may sense the resources used by other devices and perform resource allocation, trying to minimize mutual interference by prioritizing interference-free resources in the allocation. The effectiveness of such a resource allocation protocol may be reduced, however, because the future behavior of other devices may be unpredictable. The present disclosure contemplates various embodiments that may provide increased efficiency in resource utilization in case of contention based access and improve resource management of radio communication networks, in particular resource management of communication networks with the participation of vehicles. The increased efficiency in resource utilization and improved resource management may be achieved using side information (i.e., control auxiliary information). In some cases, the side information may allow devices accessing a contention based resource pool to perform the correct assumptions regarding the behavior of other devices competing for the same resources.

For example, in certain embodiments a first wireless device obtains first side information for a node. The first side information may include information about a resource allocation scheme used by the node. The first wireless device determines, based at least in part on the first side information, one or more characteristics of the resource allocation scheme used by the node. The wireless device then adapts a transmitter behavior of the first wireless device based on the determined one or more characteristics of the resource allocation scheme used by the node. As another example, a node determines a resource allocation scheme used by the node. The node generates first side information. The first side information may include information about the resource allocation scheme used by the node. The node then transmits the first side information to at least a first wireless device.

In some cases, the side information may be provided directly by the devices as part of some control message. As described in more detail herein, the side information may be any suitable information, such as one or more parameters that are useful to identify one of multiple resource allocation schemes used by a device (and/or one or more characteristics of the resource allocation scheme used by the device) in a set of contention based radio resources, and possibly to predict the resources to be used by such device at a future time instance. For example, in certain embodiments the side information may include one or more of: an indication that one or more resources used by the node were scheduled by a network node using centralized resource allocation; an indication of a resource allocation algorithm used by the node; an indication of a resource pattern used by the node; an indication that the node uses one of a predefined set of resource patterns; and an indication of one or more resources to be used by the node for a subsequent transmission at a future time instance. The transmitter behavior can be adapted depending on the strategy and parameters used by other devices competing for the shared pool of resources.

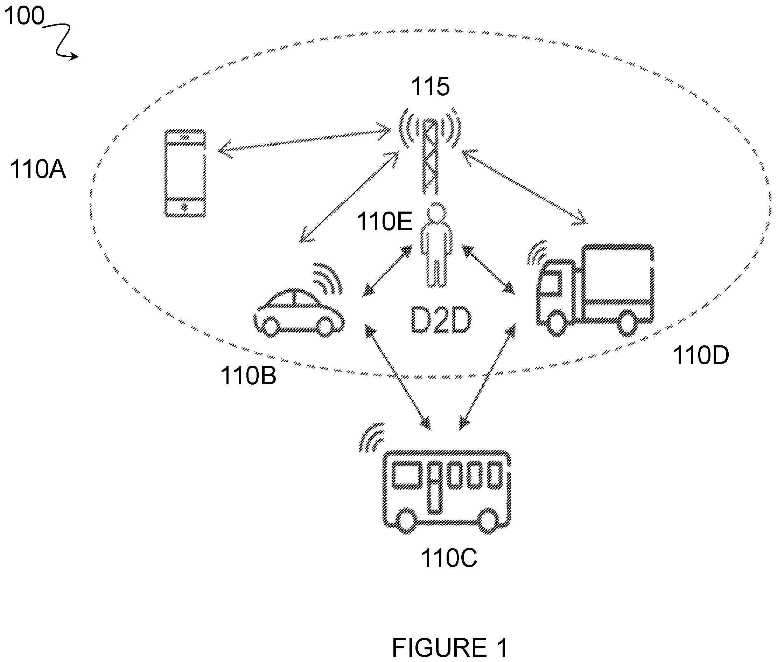

Thus, in certain embodiments the use of side information may allow a wireless device to perform the correct assumptions regarding the behavior of other devices competing for the same resources. The use of side information may therefore advantageously allow for increased efficiency in resource utilization and improved resource management of radio communication networks. As one example, the use of side information may provide for increased efficiency in resource utilization and improved resource management of communication networks with the participation of vehicles, such as the network described below in relation to FIGURE 1. In addition, certain embodiments may advantageously protect user equipment using centralized resource allocation, for example by avoiding interference with user equipment using centralized resource allocation.

FIGURE 1 is a block diagram illustrating an embodiment of a network 100, in accordance with certain embodiments. Network 100 includes one or more wireless device(s) 110 (which may be interchangeably referred to as user equipment (UEs) 110) and network node(s) 115 (which may be interchangeably referred to as eNodeBs (eNBs) 115). More particularly, wireless device 110A is a smart phone, wireless devices 110B-D are vehicles, and wireless device 110E is a pedestrian having a wireless device 110, such as, for example, a smart phone. Wireless devices 110 may communicate with network nodes 115, or with one or more other wireless devices 110 over a wireless interface. For example, wireless device 110A, 110B, and 110D may transmit wireless signals to network node 115 and/or receive wireless signals from network node 115. Wireless devices 110 may also transmit wireless signals to other wireless devices 110 and/or receive wireless signals from other wireless devices 110. For example, wireless devices 110B, 110C, 110D, and 110E may communicate using D2D communication. The wireless signals may contain voice traffic, data traffic, control signals, and/or any other suitable information. In some embodiments, an area of wireless signal coverage associated with a network node 115 may be referred to as a cell.

The network node 115 may interface with a radio network controller. The radio network controller may control network node 115 and may provide certain radio resource management functions, mobility management functions, and/or other suitable functions. In certain embodiments, the functions of the radio network controller may be included in network node 115. The radio network controller may interface with a core network node. In certain embodiments, the radio network controller may interface with the core network node via an interconnecting network. The interconnecting network may refer to any interconnecting system capable of transmitting audio, video, signals, data, messages, or any combination of the preceding. The interconnecting network may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

The core network node may manage the establishment of communication sessions and various other functionalities for wireless device 110. Wireless device 110 may exchange certain signals with the core network node using the non-access stratum layer. In non-access stratum signaling, signals between wireless device 110 and the core network node may be transparently passed through the radio access network. In certain embodiments, network node 115 may interface with one or more network nodes over an internode interface.

Examples of network 100 may include one or more wireless devices 110, and one or more different types of network nodes capable of communicating (directly or indirectly) with wireless devices 110.

In some embodiments, the non-limiting term UE is used. UEs 110 described herein can be any type of wireless device capable of communicating with network nodes 115 or another UE over radio signals. UE 110 may also be a radio communication device, target device, D2D UE, machine-type-communication UE or UE capable of machine to machine communication (M2M), low-cost and/or low-complexity UE, a sensor equipped with UE, Tablet, mobile terminals, smart phone, laptop embedded equipped (LEE), laptop mounted equipment (LME), USB dongles, Customer Premises Equipment (CPE), etc. UE 110 may operate under either normal coverage or enhanced coverage with respect to its serving cell. The enhanced coverage may be interchangeably referred to as extended coverage. UE 110 may also operate in a plurality of coverage levels (e.g., normal coverage, enhanced coverage level 1, enhanced coverage level 2, enhanced coverage level 3 and so on). In some cases, UE 110 may operate in an out-of-coverage scenario.

Also, the generic terminology, "network node" is used. It can be any kind of network node, which may comprise a base station (BS), radio base station, Node B, base station (BS), multi-standard radio (MSR) radio node such as MSR BS, evolved Node B (eNB), network controller, radio network controller (RNC), base station controller (BSC), relay node, relay donor node controlling relay, base transceiver station (BTS), access point (AP), radio access point, transmission points, transmission nodes, Remote Radio Unit (RRU), Remote Radio Head (RRH), nodes in distributed antenna system (DAS), Multi-cell/multicast Coordination Entity (MCE), core network node (e.g., MSC, MME etc), O&M, OSS, SON, positioning node (e.g., E-SMLC), MDT, or any suitable network node.

The terminology such as network node and UE should be considered non-limiting and does in particular not imply a certain hierarchical relation between the two; in general "eNodeB" could be considered as device 1 and "UE" device 2, and these two devices communicate with each other over some radio channel.

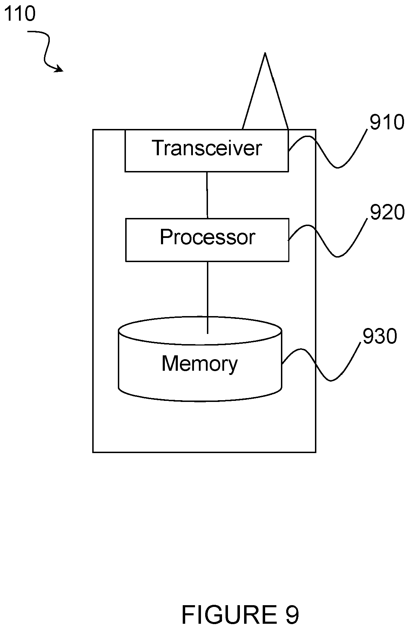

Examples of wireless device 110, network node 115, and other network nodes (such as radio network controller or core network node) are described in more detail below with respect to FIGURES 9-13.

Although FIGURE 1 illustrates a particular arrangement of network 100, the present disclosure contemplates that the various embodiments described herein may be applied to a variety of networks having any suitable configuration. For example, network 100 may include any suitable number of wireless devices 110 and network nodes 115, as well as any additional elements suitable to support communication between wireless devices or between a wireless device and another communication device (such as a landline telephone). Furthermore, although certain embodiments may be described as implemented in a Long Term Evolution (LTE) network, the embodiments may be implemented in any appropriate type of telecommunication system supporting any suitable communication standards and using any suitable components, and are applicable to any radio access technology (RAT) or multi-RAT systems in which the UE receives and/or transmits signals (e.g., data). For example, the various embodiments described herein may be applicable to LTE, LTE evolution, LTE-Advanced, UMTS, HSPA, GSM, cdma2000, WiMax, WiFi, another suitable radio access technology, or any suitable combination of one or more radio access technologies, including 5G standards. Although certain embodiments may be described in the context of V2x applications, the various embodiments may be advantageously applied to other applications. Furthermore, although certain embodiments may be described in the context of wireless transmissions in the downlink, the present disclosure contemplates that the various ss are equally applicable in the uplink.

As described above, V2x communication may include any combination of direct communication between vehicles, pedestrians, and infrastructure. FIGURE 1 illustrates a variety of V2x scenarios in which the various embodiments of the present disclosure may be applied. As an example of V2I communication, wireless device 110A, 110B, and 110D may communicate wirelessly with network node 115. As an example of V2P communication, wireless devices 110B and 110D may communicate with a pedestrian having a wireless device 110E. As an example of V2V communication, wireless devices 110B, 110C, and 110D may communicate wirelessly with each other.

In general, V2x resource allocation schemes may be based on a hybrid combination of centralized NW-based resource allocation and distributed UE-based resource allocation. For example, network node 115 may provide a set (pool) of contention-based resources for V2x transmission, and wireless devices 110 may select resources within the provided pool. The resource selection may be based on schemes that sense the interference and usage of a set of potential resources and strive for usage of free or underutilized radio resources. In general, V2x resources are expected to be multiplexed at least in both time (TDMA) and frequency (FDMA) domains. Reasonable resource allocation algorithms may strive to avoid even partial overlaps between occupied time/frequency radio resources and those selected for V2x transmission.

Due to the highly variable local radio traffic load associated to V2x deployments, and to the limitation of available spectrum, efficient radio resource allocation algorithms are important. Different wireless devices 110 may implement different (possibly proprietary) resource allocation strategies. Furthermore, resource allocation algorithms may be improved and refined across releases of specifications and products. Wireless devices 110 with different radio and/or software capabilities may also support different resource allocation algorithms compatible with their capabilities. In light of this, it is expected that different resource allocation algorithms will compete for the use of common spectrum.

In certain embodiments, side information (i.e., control auxiliary information) may be provided to a receiver, such as wireless device 110. Wireless device 110 may be any suitable device, such as, for example, a user device such as wireless device 110A, or a vehicular device such as wireless devices 110B-D described above. The side information may be used to identify one of multiple resource allocation schemes (and/or one or more characteristics of a resource allocation scheme) used in a set of contention based radio resources. For example, the side information may be provided to (or obtained by) one or more of wireless devices 110. In certain embodiments, the side information may allow wireless device 110 accessing a contention based resource pool to perform the correct assumptions regarding the behavior of other devices competing for the same resources. In certain embodiments, the side information may be provided directly by the devices as part of a control message.

To illustrate, consider the following examples. In certain embodiments, a wireless device, such as wireless device 110B, may determine a resource allocation scheme used by wireless device 110B. Wireless device 110B may generate first side information. The side information may include information about the resource allocation scheme used by wireless device 110B. The side information may include any suitable information, such as one or more parameters that are useful to identify the resource allocation scheme used by a device, and in some cases to predict the resources to be used by such device at a future time instance. For example, the side information may include one or more of: an indication that one or more resources used by wireless device 110B were scheduled by a network node, such as network node 115, using centralized resource allocation; an indication of a resource allocation pattern used by wireless device 110B; an indication of a resource pattern used by wireless device 110B; an indication that wireless device 110B uses one of a pre-defined set of resource patterns; an indication of one or more resources to be used by wireless device 110B for a subsequent transmission at a future time instance; and/or any other suitable information. Wireless device 110B may transmit the first side information to one or more wireless devices, such as wireless devices 110C, 110E, etc.

Another wireless device, such as wireless device 110C, may obtain the first side information for wireless device 110B. As noted above, the first side information may include information about a resource allocation scheme used by wireless device 110B. Wireless device 110C may obtain the first side information in any suitable fashion. For example, in certain embodiments wireless device 110C may receive the first side information transmitted by wireless device 110B as described above. As another example, wireless device 110C may obtain the first side information from another node that has the first side information, such as another wireless device (e.g., wireless device 110D) or a network node (such as network node 115). In some cases, wireless device 110C may obtain the first side information based on a resource mapping, or based on one or more predefined configurations.

Wireless device 110C may determine, based at least in part on the obtained first side information, one or more characteristics of the resource allocation scheme used by wireless device 110B. As one example, wireless device 110C may predict, based at least in part on the first side information, the resources to be used by wireless device 110B at a future time instance. Wireless device 110C may adapt a transmitter behavior based on the determined one or more characteristics of the resource allocation scheme used by the node. The transmitter behavior of wireless device 110C can be adapted depending on the strategy and parameters used by wireless device 110B that may be competing for the shared pool of resources, which may provide increased efficiency in resource utilization in case of contention based access.

Wireless device 110C may adapt a transmitter behavior based on the determined one or more characteristics of the resource allocation scheme used by the node in any suitable manner. For example, wireless device 110C may avoid transmitting on resources that would interfere with one or more resources of the resource allocation scheme used by wireless device 110B. As another example, wireless device 110C may select one or more resource patterns that are compatible with the resource allocation scheme used by wireless device 110B. As still another example, wireless device 110C may select a resource allocation scheme that is compatible with the resource allocation scheme used by wireless device 110B.

In one example embodiment, wireless device 110C may determine that one or more resources used by wireless device 110B were scheduled by a network node, such as network node 115, using centralized resource allocation. In such a scenario, wireless device 110C may adapt its transmitter behavior by, for example, avoiding transmitting on resources that would interfere with the one or more resources scheduled by network node 115 using centralized resource allocation.

In another example, wireless device 110C may determine that wireless device 110B uses a random resource allocation scheme. In such a scenario, wireless device 110C may transmit using one or more resources without attempting to avoid transmitting on resources that would interfere with one or more resources of the resource allocation scheme used by wireless device 110B.

In certain embodiments, wireless device 110C may determine a resource allocation scheme used by wireless device 110C, and generate second side information. The second side information may include information about the resource allocation scheme used by wireless device 110C. For example, the second side information may include similar information to that described above with respect to the first side information generated by wireless device 110B, such as one or more of: an indication that one or more resources used by wireless device 110C were scheduled by a network node, such as network node 115, using centralized resource allocation; an indication of a resource allocation pattern used by wireless device 110C; an indication of a resource pattern used by wireless device 110C; an indication that wireless device 110C uses one of a pre-defined set of resource patterns; an indication of one or more resources to be used by wireless device 110C for a subsequent transmission at a future time instance; and/or any other suitable information. Wireless device 110C may transmit the second side information to one or more wireless devices, such as wireless devices 110B, 110D, etc. The second side information may be used by other wireless devices in a similar manner to that described above, which may advantageously provide increased efficiency in resource utilization and improved resource management of network 100.

Although the example embodiments above are described in terms of wireless devices 110B and 110C, the present disclosure contemplates that the various embodiments described herein are applicable to any wireless device 110 and/or any suitable number of wireless devices 110 within any suitable configuration of network 100.

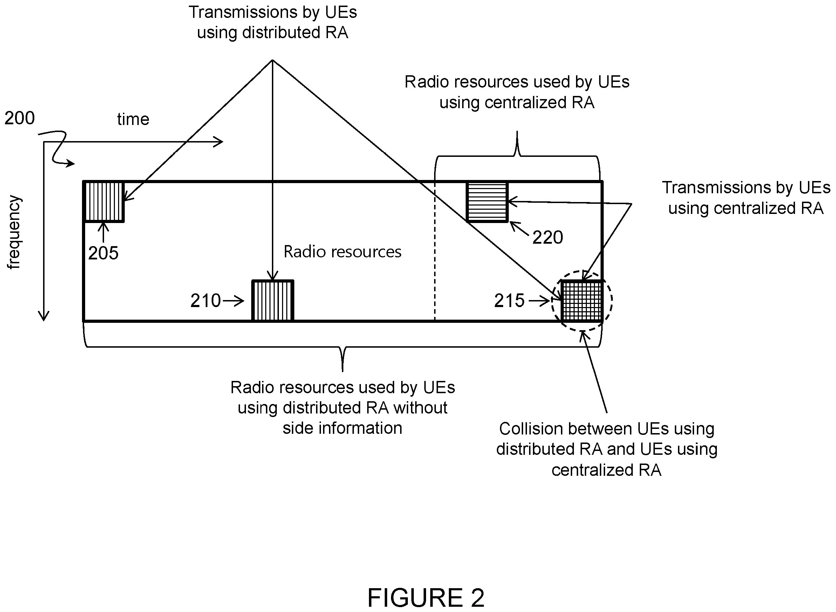

FIGURE 2 illustrates an example in which different wireless devices may implement different resource allocation strategies without the use of side information. More particularly, FIGURE 2 illustrates a pool of radio resources 200 shown in the form of a time-frequency resource grid. Within the pool of radio resources 200 are radio resources 205, 210, 215 and 220. In the example of FIGURE 2, radio resources 205, 210, and 215 are used for transmissions by UEs using distributed resource allocation (without side information), and radio resources 215 and 220 are used for transmissions by UEs using centralized resource allocation. As shown in the example of FIGURE 2, both UEs using distributed resource allocation and UEs using centralized resource allocation are using radio resource 215 for transmissions.

The UEs using distributed resource allocation may not be aware that some UEs are scheduled by the network node (i.e., centralized resource allocation). Furthermore, the group of resources that may be used by the UEs scheduled by the network node may also be unknown to the UEs using distributed resource allocation. Thus, the UEs using distributed resource allocation may not be able to avoid interfering with UEs using centralized resource allocation. This may result in collision between UEs using distributed resource allocation and UEs using centralized resource allocation.

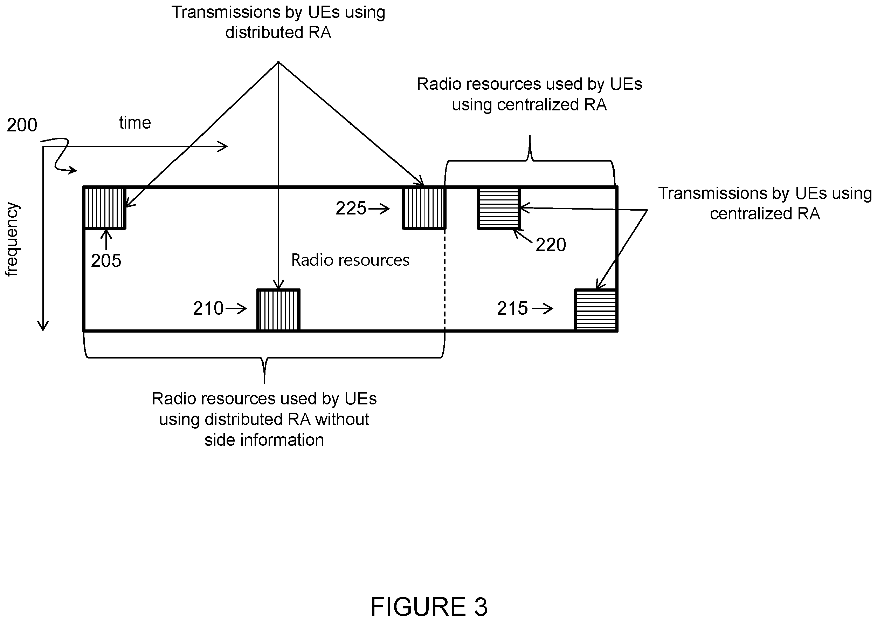

FIGURE 3 illustrates an example in which different wireless devices may implement different resource allocation strategies with the use of side information, in accordance with certain embodiments. More particularly, FIGURE 3 illustrates a pool of radio resources 200 shown in the form of a time-frequency resource grid. Within the pool of radio resources 200 are radio resources 205, 210, 215, 220 and 225. In the example of FIGURE 3, the UEs using distributed resource allocation may obtain side information. The side information may be obtained in any suitable manner. For example, the UEs using centralized resource allocation may send side information to the UEs using distributed resource allocation. The side information may include any suitable information. For example, the side information may include information about the type of resource allocation used by UEs using centralized resource allocation, such as information about which resources may be used by UEs with centralized resource allocation.

The UEs using distributed resource allocation may use the side information to advantageously avoid interfering with UEs using centralized resource allocation. That is, based on the side information, the UEs using distributed resource allocation may be aware that some UEs are scheduled by the network node using centralized resource allocation, and the radio resources that may be used by the UEs scheduled by the network node may be known to the UEs using distributed resource allocation. In the example of FIGURE 3, UEs using distributed resource allocation use radio resources 205, 210, and 225 for transmissions, while UEs using centralized resource allocation use radio resources 215 and 220. Although collisions between UEs using distributed resource allocation may still happen, collisions between UEs using distributed resource allocation and UEs using centralized resource allocation are avoided. This may advantageously protect the UEs using centralized resource allocation.

One way to enable predictability of the resource allocation by a certain transmitter (e.g., wireless device 110B described above in relation to FIGURE 1) is to constrain the used resources to a set of possible pre-defined time/frequency resource patterns. By selecting one of such patterns, it may be possible for another wireless device (e.g., wireless device 110C described above in relation to FIGURE 1) to predict the future allocation by such a device under a number of assumptions (e.g., that the time instance within the pattern and the pattern index are known or that future allocations are a deterministic function of present allocations). However, it may be hard to fulfill the above assumptions on resources predictability unless the set of patterns potentially used by a certain wireless device is known. Moreover, different resource allocation strategies may use different sets of patterns. Each set of patterns may fulfill properties that are desirable for a given resource allocation strategy. For example, certain patterns sets may allow deterministic resource allocation across different scheduling periods, where the scheduling period may be defined as a resource pool.

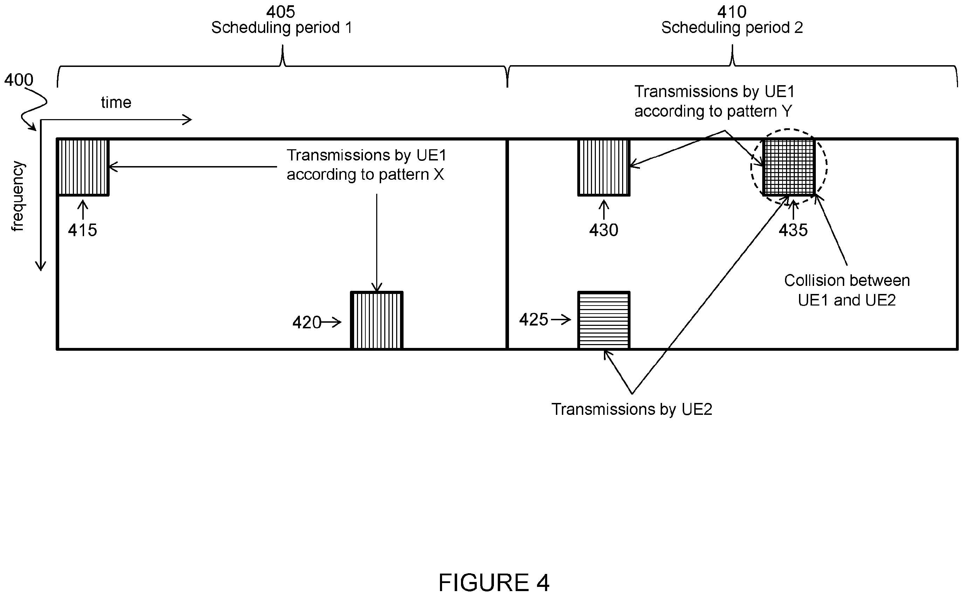

FIGURE 4 illustrates an example in which different wireless devices are scheduled in overlapping or common sets of resources without the use of side information. More particularly, FIGURE 4 illustrates a time frequency grid 400. Time frequency grid 400 is divided into two scheduling periods, scheduling period 1 405 and scheduling period 2 410. In the example of FIGURE 4, a first UE, UE1, is scheduled for transmission in scheduling period 1 405 using a first resource allocation pattern X, and scheduled for transmission in scheduling period 2 410 using resource allocation pattern Y. A second UE, UE2, is scheduled for transmission in only scheduling period 2 410. In the example shown in FIGURE 4, UE1 is scheduled to use radio resources 415 and 420 during scheduling period 1 405, and radio resources 430 and 435 during scheduling period 2 410. UE2, meanwhile, is scheduled to use radio resources 425 and 435 during scheduling period 2 410. Without side information, UE2 cannot know the resources that UE1 will use (for example, if distributed resource allocation is used). Thus, a collision between UE1 and UE2 may happen.

In certain embodiments, a receiver (such as wireless device 110C described above in relation to FIGURE 1) may obtain side information in order to assist in the identification of the resource allocation scheme employed by certain transmitter(s) (e.g., other wireless devices, such as wireless devices 110B described above in relation to FIGURE 1), and if possible enable or improve prediction of resources used by said transmitter(s) at future time instances. The side information may be obtained in any suitable manner. For example, in certain embodiments, the side information may be obtained at the receiver as control information that is explicitly signaled or implicitly mapped to some transmission parameters.

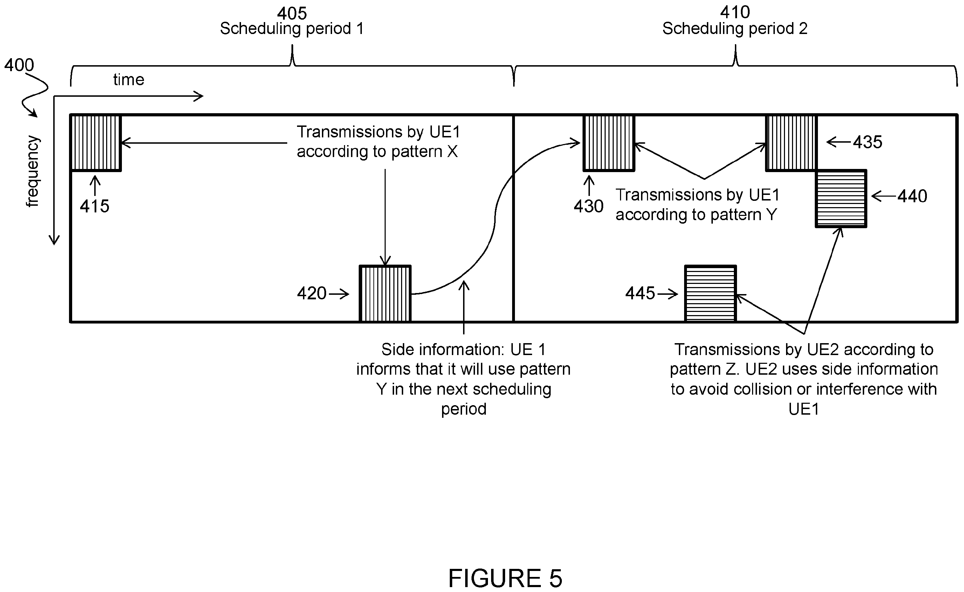

FIGURE 5 illustrates an example in which different wireless devices are scheduled in overlapping or common sets of resources with the use of side information, in accordance with certain embodiments. More particularly, FIGURE 5 illustrates a time frequency grid 400. Time frequency grid 400 is divided into two scheduling periods, scheduling period 1 405 and scheduling period 2 410. In the example of FIGURE 5, a first UE, UE1, is scheduled for transmission in scheduling period 1 405 using a first resource allocation pattern X (including radio resources 415 and 420) and scheduled for transmission in scheduling period 2 410 using resource allocation pattern Y (including radio resources 430 and 435). A second UE, UE2, is scheduled for transmission in only scheduling period 2 410.

In certain embodiments, UE2 obtains side information for UE1. For example, UE1 may send side information to UE2. The side information may indicate information about the resource allocation scheme of UE1. In the example illustrated in FIGURE 5, the side information may indicate that UE1 will use pattern Y in the next scheduling period (i.e., scheduling period 2 410). UE2 may use the side information to avoid collision, interference, etc. by choosing appropriate radio resources for its transmission. In the example shown in FIGURE 5, UE1 selects radio resources 430 and 435 for transmissions during scheduling period 2 410 according to resource allocation pattern Y. Based on the side information, UE2 selects radio resources 440 and 445 for transmissions during scheduling period 2 410 according to resource allocation pattern Z. By using the side information to select resource allocation pattern Z for transmissions during scheduling period 2 410, UE2 may advantageously avoid collision or interference with UE1.

Thus, side information may be provided to a receiver (such as wireless device 110C described above in relation to FIGURE 1) in order to assist in the identification of the resource allocation scheme employed by certain transmitter(s) (e.g., wireless device 110B described above in relation to FIGURE 1), and if possible enable or improve prediction of resources used by said transmitter(s) at future time instances. The side information may be obtained in any suitable manner. In certain embodiments, the side information may be obtained at the receiver as control information that is explicitly signaled or implicitly mapped to some transmission parameters. The side information may include any suitable information. For example, the side information may include an indication of the used resource allocation algorithm. In certain embodiments, the information may include one or more parameters that may enable or improve prediction of resources used by said transmitter(s) at future time instances. For example, the side information may indicate whether the transmitter follows one of multiple possibly predefined resource patterns and possibly indicate which resource pattern is selected (e.g., by signaling an index). In another example, the side information may explicitly indicate the radio resources to be used by a transmitter at a future time instance. In a further example, the side information may indicate the resource allocation scheme and/or one or more parameters used by the transmitters accessing a specific set of resources (e.g., a certain resource pool associated with a certain cell or used out of network coverage).

The side information may be provided in any suitable manner. For example, the side information may be transmitted directly by a node performing V2x transmission. As another example, the side information may be provided by a third node, which may be another wireless device 110 or a network node (e.g., an eNB such as network node 115 described above). In case of eNB 115 signaling, the information may regard multiple cells and/or geographical areas. The side information may be part of control system information such as SIB, MIB or sidelink control information.

In some embodiments, the side information may be mapped to transmission parameters used for direct signals (e.g., V2x messages). For example, any of the information described above may be associated with specific reference signal sequences or parameters, scrambling sequences, or any other transmission parameter that may be detected by the receiver. In some embodiments, the side information may be part of physical layer control information multiplexed with a V2x message.

A wireless device receiving side information may adapt its transmitter behavior based on the obtained side information in any suitable manner. For example, a wireless device (such as wireless device 110C described above in relation to FIGURE 1) may detect that another transmitter (e.g., wireless device 110B described above in relation to FIGURE 1) competing for a common pool of resources behaves in an unpredictable way (e.g., random resource allocation), and may not attempt to avoid the resources used by such competing transmitter. On the other hand, the same wireless device may preferably avoid transmitting on resources colliding with those indicated by another device. In a further example, a wireless device may select resource patterns that are compatible (e.g., in terms of reduced number of collisions or lower interference) with the patterns used by other devices in a set of common resources. In a further example, the wireless device may align its resource allocation scheme to the resource allocation schemes used by other devices in a set of common resources. In some cases, this may be accomplished by selecting a resource allocation scheme that is compatible with the resource allocation scheme used by the node.

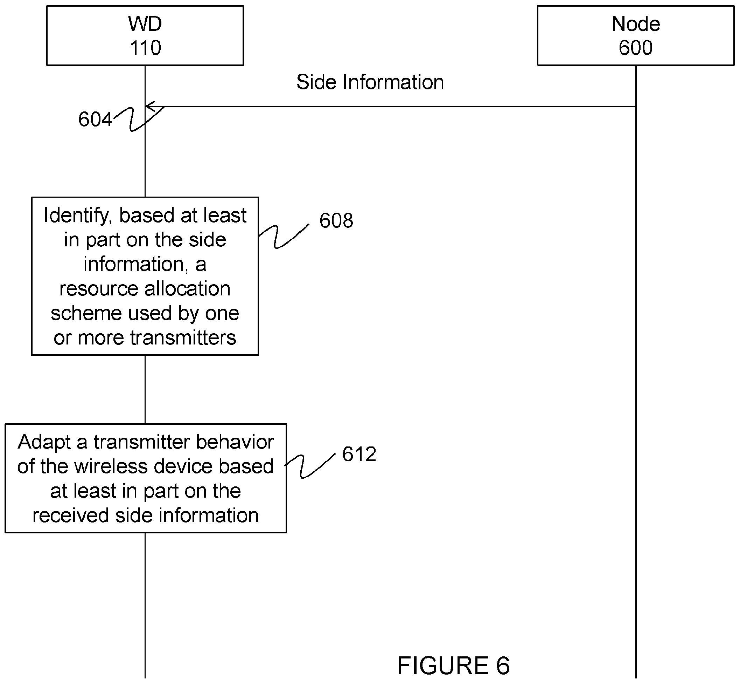

FIGURE 6 illustrates a signal flow diagram, in accordance with certain embodiments. The signal flow begins at step 604, where node 600 provides side information to a wireless device 110. Node 600 may be any suitable node. For example, in certain embodiments node 600 may be a node performing V2x transmission. As another example, node 600 may be another wireless device 110, or a network node, such as network node 115 described above.

At step 608, wireless device 110 identifies, based at least in part on the side information, a resource allocation scheme used by one or more transmitters. In certain embodiments, the one or more transmitters may be other wireless devices. As described above, the side information may include any suitable type of information. For example, the side information may indicate the resource allocation algorithm used by the one or more transmitters. As another example, the side information may indicate one or more parameters that may enable wireless device 110 to predict resources used by the one or more transmitters.

At step 612, wireless device 110 adapts a transmitter behavior of the wireless device 110 based at least in part on the received side information. Wireless device 110 may adapt its transmitter behavior in any suitable manner. For example, wireless device 110 may identify that another transmitter competing for a common pool of resources behaves in an unpredictable way (e.g., random resource allocation). In such a scenario, wireless device 110 may not attempt to avoid the resources used by such competing transmitter. As another example, wireless device 110 may adapt its transmitter behavior to avoid transmitting on resources colliding with those identified for another transmitter. As yet another example, wireless device 110 may adapt its transmitter behavior by selecting a resource pattern that is compatible (e.g., in terms of reduced number of collisions or lower interference) with the patterns identified as being used by other transmitters in a set of common resources. As still another example, wireless device 110 may adapt its transmitter behavior by aligning its resource allocation scheme to a resource allocation scheme used by the one or more transmitters in a set of common resources. This may be accomplished by selecting a resource allocation scheme that is compatible with the resource allocation scheme used by the node.

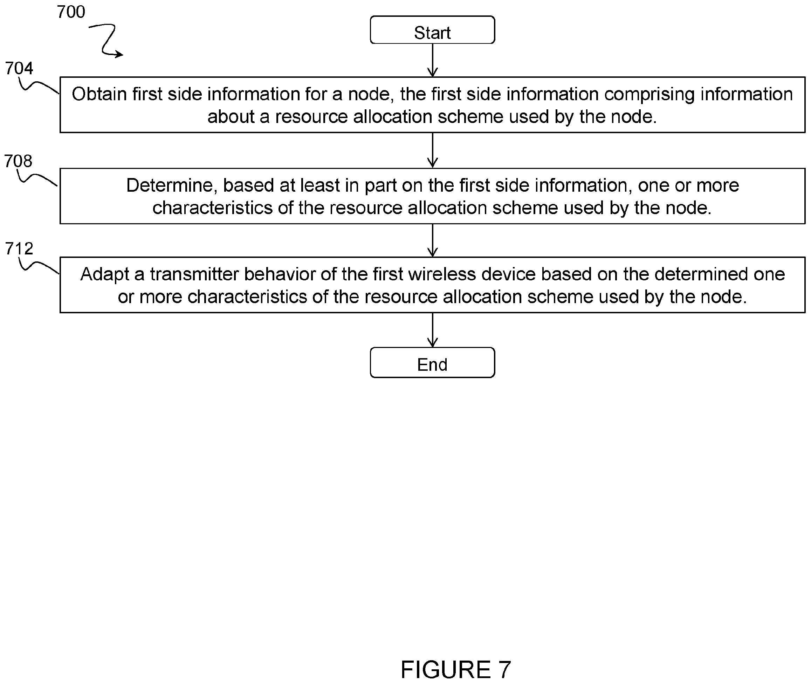

FIGURE 7 is a flow diagram of a method 700 in a first wireless device, in accordance with certain embodiments. The method begins at step 704, where the first wireless device obtains first side information from a node, the first side information comprising information about a resource allocation scheme used by the node. In certain embodiments, the node may comprise another wireless device or a network node. The first wireless device may comprise a vehicular device engaged in device-to-device communication.

The first side information may be obtained in any suitable manner. For example, in certain embodiments obtaining first side information for the node may comprise one or more of: receiving first side information from the node; obtaining first side information based on a resource mapping; and determining first side information based on one or more predefined configurations. The first side information may include any suitable information. For example, in certain embodiments the first side information may comprise one or more of: an indication that one or more resources used by the node were scheduled by a network node using centralized resource allocation; an indication of a resource allocation algorithm used by the node; an indication of a resource pattern used by the node; an indication that the node uses one of a pre-defined set of resource patterns; and an indication of one or more resources to be used by the node for a subsequent transmission at a future time instance.

At step 708, the first wireless device determines, based at least in part on the first side information, one or more characteristics of the resource allocation scheme used by the node. In certain embodiments, determining, based at least in part on the first side information, one or more characteristics of the resource allocation scheme used by the node may comprise predicting, based at least in part on the first side information, the resources to be used by the node at a future time instance.

At step 712, the first wireless device adapts a transmitter behavior of the first wireless device based on the determined one or more characteristics of the resource allocation scheme used by the node. In certain examples, adapting a transmitter behavior of the first wireless device based on the determined one or more characteristics of the resource allocation scheme used by the node may comprise one or more of: avoiding transmitting on resources that would interfere with one or more resources of the resource allocation scheme used by the node; selecting one or more resource patterns that are compatible with the resource allocation scheme used by the node; and selecting a resource allocation scheme that is compatible with the resource allocation scheme used by the node.

In a particular embodiment, determining, based at least in part on the first side information, one or more characteristics of the resource allocation scheme used by the node may comprise determining that one or more resources used by the node were scheduled by a network node using centralized resource allocation. In such an embodiment, adapting the transmitter behavior of the first wireless device based on the determined one or more characteristics of the resource allocation scheme used by the node may comprise avoiding transmitting on resources that would interfere with one or more resources of the resource allocation scheme used by the node that were scheduled by the network node using centralized resource allocation.

In a particular example, determining, based at least in part on the first side information, one or more characteristics of the resource allocation scheme used by the node may comprise determining that the node uses a random resource allocation scheme. In such an example, adapting the transmitter behavior of the first wireless device based on the determined one or more characteristics of the resource allocation scheme used by the node may comprise transmitting using one or more resources without attempting to avoid transmitting on resources that would interfere with one or more resources of the resource allocation scheme used by the node.

In certain embodiments, the method may further comprise transmitting second side information to at least a second wireless device, the second side information comprising information about a resource allocation scheme used by the first wireless device. In certain embodiments, the node may comprise a network node, and the first side information comprising information about the resource allocation scheme used by the node may comprise information about one or more resource allocations scheduled by the network node for one or more wireless devices.

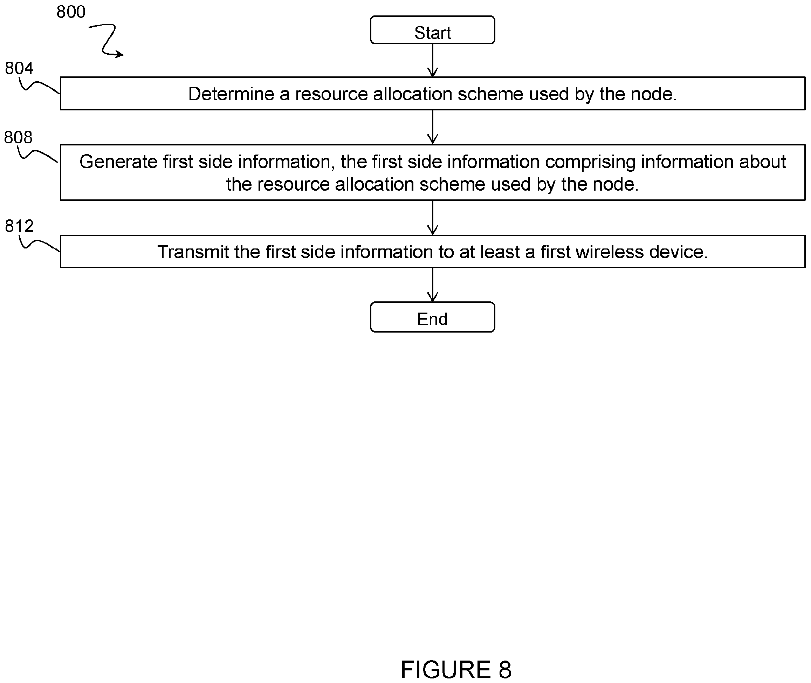

FIGURE 8 is a flow diagram of a method 800 in a node, in accordance with certain embodiments. The method begins at step 804, where the node determines a resource allocation scheme used by the node.

At step 808, the node generates first side information, the first side information comprising information about the resource allocation scheme used by the node. The first side information may include any suitable information. For example, in certain embodiments the first side information may comprise one or more of: an indication that one or more resources used by the node were scheduled by a network node using centralized resource allocation; an indication of a resource allocation algorithm used by the node; an indication of a resource pattern used by the node; an indication that the node uses one of a pre-defined set of resource patterns; and an indication of one or more resources to be used by the node for a subsequent transmission at a future time instance.

At step 812, the node transmits the first side information to at least a first wireless device. In certain embodiments, transmitting the first side information to at least the first wireless device may comprise transmitting the first side information to at least the first wireless device as part of a control message.

In the claimed embodiment, the method comprises receiving second side information from a second wireless device, the second side information comprising information about a resource allocation scheme used by the second wireless device, wherein the second wireless device is one of the same wireless device as the first wireless device or a different wireless device. The method may further comprise determining, based at least in part on the second side information, one or more characteristics of the resource allocation scheme used by the second wireless device, and adapting a transmitter behavior of the node based on the determined one or more characteristics of the resource allocation scheme used by the second wireless device.

In certain embodiments, the node comprises another wireless device.

As one example, the node may comprise another wireless device engaged in device-to-device communication. As another example, the node may comprise a network node, and the first side information may comprise information about one or more resource allocations scheduled by the network node for one or more wireless devices.

FIGURE 9 is a block schematic of an exemplary wireless device, in accordance with certain embodiments. Wireless device 110 may refer to any type of wireless device communicating with a node and/or with another wireless device in a cellular or mobile communication system. Examples of wireless device 110 include a mobile phone, a smart phone, a PDA (Personal Digital Assistant), a portable computer (e.g., laptop, tablet), a sensor, a modem, a machine-type-communication (MTC) device / machine-to-machine (M2M) device, laptop embedded equipment (LEE), laptop mounted equipment (LME), USB dongles, a D2D capable device, or another device that can provide wireless communication. A wireless device 110 may also be referred to as UE, a station (STA), a device, or a terminal in some embodiments. Wireless device 110 includes transceiver 910, processor 920, and memory 930. In some embodiments, transceiver 910 facilitates transmitting wireless signals to and receiving wireless signals from network node 115 (e.g., via an antenna), processor 920 executes instructions to provide some or all of the functionality described above as being provided by wireless device 110, and memory 930 stores the instructions executed by processor 920. For example, in certain embodiments wireless device 110 may perform the functionality described above in relation to FIGURES 1-8 such as obtaining first side information for a node, determining (based on the first side information) one or more characteristics of a resource allocation scheme used by the node, and adapting a transmit behavior of the wireless device based on the determined one or more characteristics of the resource allocation scheme used by the node. As another example, wireless device 110 may perform the functionality described above in relation to FIGURES 1-8 such as determining a resource allocation used by wireless device 110, generating first side information, and transmitting the first side information to another wireless device.

Processor 920 may include any suitable combination of hardware and software implemented in one or more modules to execute instructions and manipulate data to perform some or all of the described functions of wireless device 110, such as the functions of wireless device 110 described above in relation to FIGURES 1-8. In some embodiments, processor 920 may include, for example, one or more computers, one or more central processing units (CPUs), one or more microprocessors, one or more applications, one or more application specific integrated circuits (ASICs), one or more field programmable gate arrays (FPGAs) and/or other logic.

Memory 930 is generally operable to store instructions, such as a computer program, software, an application including one or more of logic, rules, algorithms, code, tables, etc. and/or other instructions capable of being executed by a processor. Examples of memory 930 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by processor 920.

Other embodiments of wireless device 110 may include additional components beyond those shown in FIGURE 9 that may be responsible for providing certain aspects of the wireless device's functionality, including any of the functionality described above and/or any additional functionality (including any functionality necessary to support the solution described above). As just one example, wireless device 110 may include input devices and circuits, output devices, and one or more synchronization units or circuits, which may be part of the processor 920. Input devices include mechanisms for entry of data into wireless device 110. For example, input devices may include input mechanisms, such as a microphone, input elements, a display, etc. Output devices may include mechanisms for outputting data in audio, video and/or hard copy format. For example, output devices may include a speaker, a display, etc.

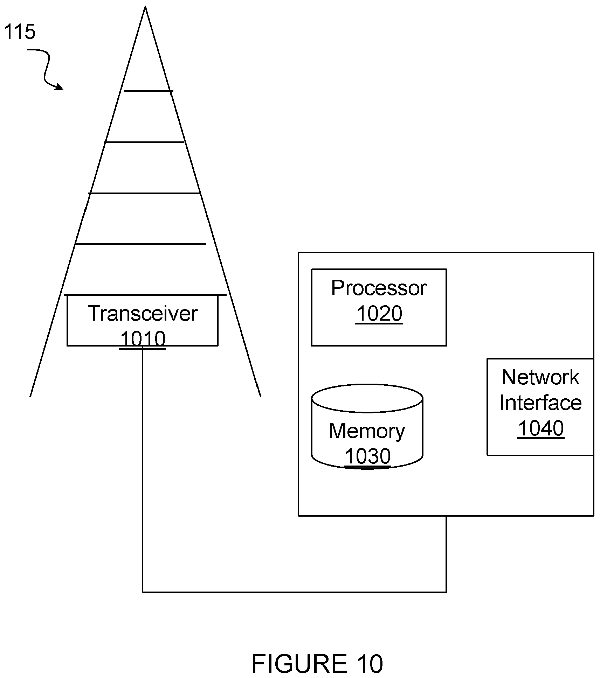

FIGURE 10 is a block schematic of an exemplary network node, in accordance with certain embodiments. Network node 115 may be any type of radio network node or any network node that communicates with a UE and/or with another network node. Examples of network node 115 include an eNodeB, a node B, a base station, a wireless access point (e.g., a Wi-Fi access point), a low power node, a base transceiver station (BTS), relay, donor node controlling relay, transmission points, transmission nodes, remote RF unit (RRU), remote radio head (RRH), multi-standard radio (MSR) radio node such as MSR BS, nodes in distributed antenna system (DAS), O&M, OSS, SON, positioning node (e.g., E-SMLC), MDT, or any other suitable network node. Network nodes 115 may be deployed throughout network 100 as a homogenous deployment, heterogeneous deployment, or mixed deployment. A homogeneous deployment may generally describe a deployment made up of the same (or similar) type of network nodes 115 and/or similar coverage and cell sizes and inter-site distances. A heterogeneous deployment may generally describe deployments using a variety of types of network nodes 115 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 115 may include one or more of transceiver 1010, processor 1020, memory 1030, and network interface 1040. In some embodiments, transceiver 1010 facilitates transmitting wireless signals to and receiving wireless signals from wireless device 110 (e.g., via an antenna), processor 1020 executes instructions to provide some or all of the functionality described above as being provided by a network node 115, memory 1030 stores the instructions executed by processor 1020, and network interface 1040 communicates signals to backend network components, such as a gateway, switch, router, Internet, Public Switched Telephone Network (PSTN), core network nodes or radio network controllers 130, etc. For example, in certain embodiments network node 115 may perform the functionality described above in relation to FIGURES 1-8 such as determining a resource allocation scheme used by the network node, generating first side information, and transmitting the first side information to a wireless device (e.g., wireless device 110 described above).

Processor 1020 may include any suitable combination of hardware and software implemented in one or more modules to execute instructions and manipulate data to perform some or all of the described functions of network node 115, such as those described above in relation to FIGURES 1-8 above. In some embodiments, processor 1020 may include, for example, one or more computers, one or more central processing units (CPUs), one or more microprocessors, one or more applications, and/or other logic.

Memory 1030 is generally operable to store instructions, such as a computer program, software, an application including one or more of logic, rules, algorithms, code, tables, etc. and/or other instructions capable of being executed by a processor. Examples of memory 1030 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1040 is communicatively coupled to processor 1020 and may refer to any suitable device operable to receive input for network node 115, send output from network node 115, perform suitable processing of the input or output or both, communicate to other devices, or any combination of the preceding. Network interface 1040 may include appropriate hardware (e.g., port, modem, network interface card, etc.) and software, including protocol conversion and data processing capabilities, to communicate through a network.

Other embodiments of network node 115 may include additional components beyond those shown in FIGURE 10 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

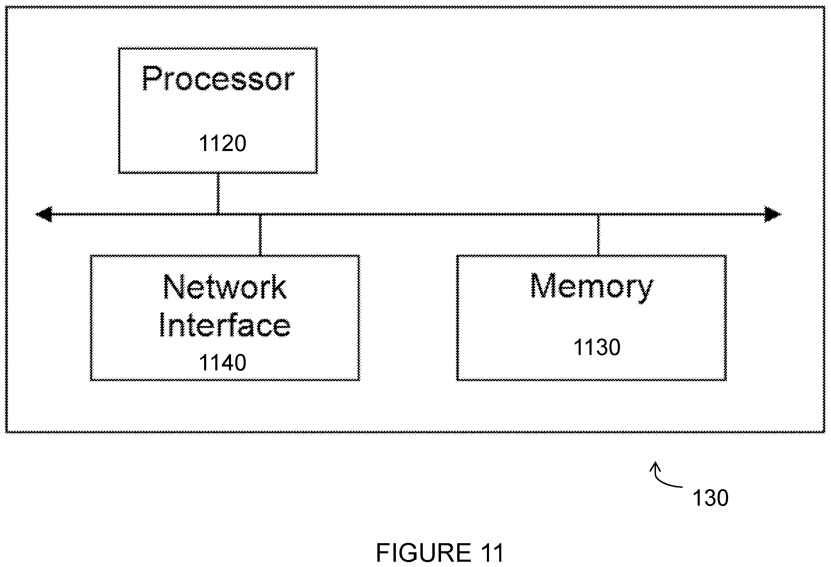

FIGURE 11 is a block schematic of an exemplary radio network controller or core network node 130, in accordance with certain embodiments. Examples of network nodes can include a mobile switching center (MSC), a serving GPRS support node (SGSN), a mobility management entity (MME), a radio network controller (RNC), a base station controller (BSC), and so on. The radio network controller or core network node 130 includes processor 1120, memory 1130, and network interface 1140. In some embodiments, processor 1120 executes instructions to provide some or all of the functionality described above as being provided by the network node, memory 1130 stores the instructions executed by processor 1120, and network interface 1140 communicates signals to any suitable node, such as a gateway, switch, router, Internet, Public Switched Telephone Network (PSTN), network nodes 115, radio network controllers or core network nodes 130, etc. For example, in certain embodiments radio network controller or core network node 130 may perform the functions described above in relation to FIGURES 1-8 as being performed by a radio network controller or core network node.

Processor 1120 may include any suitable combination of hardware and software implemented in one or more modules to execute instructions and manipulate data to perform some or all of the described functions of the radio network controller or core network node 130. In some embodiments, processor 1120 may include, for example, one or more computers, one or more central processing units (CPUs), one or more microprocessors, one or more applications, and/or other logic.

Memory 1130 is generally operable to store instructions, such as a computer program, software, an application including one or more of logic, rules, algorithms, code, tables, etc. and/or other instructions capable of being executed by a processor. Examples of memory 1130 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1140 is communicatively coupled to processor 1120 and may refer to any suitable device operable to receive input for the network node, send output from the network node, perform suitable processing of the input or output or both, communicate to other devices, or any combination of the preceding. Network interface 1140 may include appropriate hardware (e.g., port, modem, network interface card, etc.) and software, including protocol conversion and data processing capabilities, to communicate through a network.

Other embodiments of the network node may include additional components beyond those shown in FIGURE 11 that may be responsible for providing certain aspects of the network node's functionality, including any of the functionality described above and/or any additional functionality (including any functionality necessary to support the solution described above).

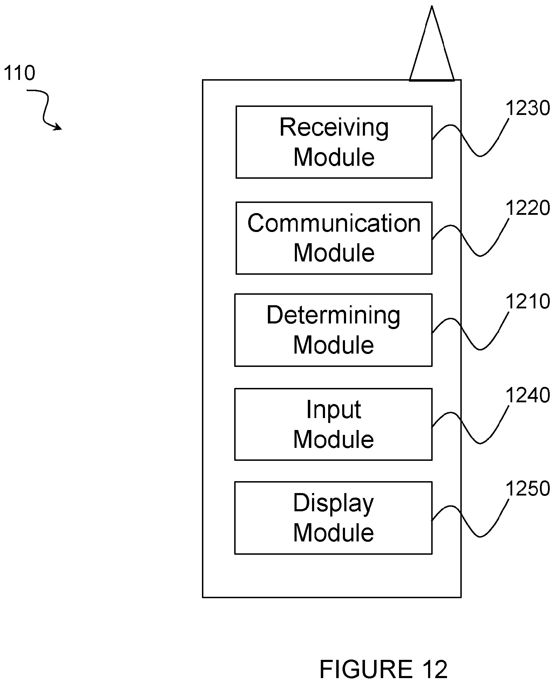

FIGURE 12 is a block schematic of an exemplary wireless device, in accordance with certain embodiments. Wireless device 110 may include one or more modules. For example, wireless device 110 may include a determining module 1210, a communication module 1220, a receiver module 1230, an input module 1240, a display module 1250, and any other suitable modules. In certain embodiments, wireless device 110 may perform the functionality described above in relation to FIGURES 1-8 such as obtaining first side information for a node, determining (based on the first side information) one or more characteristics of a resource allocation scheme used by the node, and adapting a transmit behavior of the wireless device based on the determined one or more characteristics of the resource allocation scheme used by the node. As another example, wireless device 110 may perform the functionality described above in relation to FIGURES 1-8 such as determining a resource allocation used by wireless device 110, generating first side information, and transmitting the first side information to another wireless device.

Determining module 1210 may perform the processing functions of wireless device 110. For example, determining module 1210 may obtain first side information for a node, the first side information comprising information about a resource allocation scheme used by the node. As another example, determining module 1210 may determine, based at least in part on the first side information, one or more characteristics of the resources allocation scheme used by the node. As another example, determining module 1210 may adapt a transmitter behavior of the first wireless device based on the determined one or more characteristics of the resource allocation scheme used by the node. In certain embodiments, determining module 1210 may determine a resource allocation scheme used by the wireless device, and generate first side information, the first side information comprising information about the resource allocation scheme used by the wireless device. Determining module 1210 may include or be included in one or more processors, such as processor 920 described above in relation to FIGURE 9. Determining module 1210 may include analog and/or digital circuitry configured to perform any of the functions of determining module 1210 and/or processor 920 described above. The functions of determining module 1210 described above may, in certain embodiments, be performed in one or more distinct modules.

Communication module 1220 may perform the transmission functions of wireless device 110. For example, communication module 1220 may transmit side information to at least a second wireless device, the second side information comprising information about a resource allocation scheme used by the first wireless device. Communication module 1220 may transmit messages to one or more of network nodes 115 of network 100. Communication module 1220 may include a transmitter and/or a transceiver, such as transceiver 910 described above in relation to FIGURE 9. Communication module 1220 may include circuitry configured to wirelessly transmit messages and/or signals. In particular embodiments, communication module 1220 may receive messages and/or signals for transmission from determining module 1210.

Receiving module 1230 may perform the receiving functions of wireless device 110. As one example, receiving module 1230 may obtain first side information for a node, the first side information comprising information about a resource allocation scheme used by the node. For example, receiving module 1230 may receive first side information from the node. Receiving module 1230 may include a receiver and/or a transceiver. Receiving module 1230 may include circuitry configured to wirelessly receive messages and/or signals. In particular embodiments, receiving module 1230 may communicate received messages and/or signals to determining module 1210.

Input module 1240 may receive user input intended for wireless device 110. For example, the input module may receive key presses, button presses, touches, swipes, audio signals, video signals, and/or any other appropriate signals. The input module may include one or more keys, buttons, levers, switches, touchscreens, microphones, and/or cameras. The input module may communicate received signals to determining module 1210.

Display module 1250 may present signals on a display of wireless device 110. Display module 1250 may include the display and/or any appropriate circuitry and hardware configured to present signals on the display. Display module 1250 may receive signals to present on the display from determining module 1210.

Determining module 1210, communication module 1220, receiving module 1230, input module 1040, and display module 1250 may include any suitable configuration of hardware and/or software. Wireless device 110 may include additional modules beyond those shown in FIGURE 12 that may be responsible for providing any suitable functionality, including any of the functionality described above and/or any additional functionality (including any functionality necessary to support the various solutions described herein).

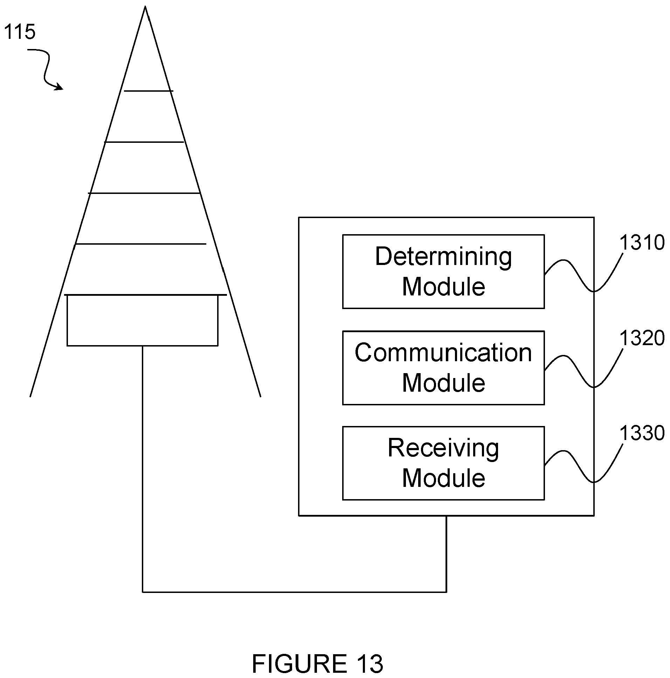

FIGURE 13 is a block schematic of an exemplary network node 115, in accordance with certain embodiments. Network node 115 may include one or more modules. For example, network node 115 may include determining module 1310, communication module 1320, receiving module 1330, and any other suitable modules. In some embodiments, one or more of determining module 1310, communication module 1320, receiving module 1330, or any other suitable module may be implemented using one or more processors, such as processor 1020 described above in relation to FIGURE 10. In some cases, the functions of two or more of the various modules may be combined into a single module. In certain embodiments network node 115 may perform the functionality described above in relation to FIGURES 1-8 such as determining a resource allocation scheme used by the network node, generating first side information, and transmitting the first side information to a wireless device (e.g., wireless device 110 described above).

Determining module 1310 may perform the processing functions of network node 115. As one example, determining module 1310 may determine a resource allocation scheme used by the node. As another example, determining module 1310 may generate first side information, the first side information comprising information about the resource allocation scheme used by the node. Determining module 1310 may include or be included in one or more processors, such as processor 1020 described above in relation to FIGURE 10. Determining module 1310 may include analog and/or digital circuitry configured to perform any of the functions of determining module 1310 and/or processor 820 described above. The functions of determining module 1310 may, in certain embodiments, be performed in one or more distinct modules.

Communication module 1320 may perform the transmission functions of network node 115. As one example, communication module 1320 may transmit side information, for example to a wireless device or other node. Communication module 1320 may transmit messages to one or more of wireless devices 110. Communication module 1320 may include a transmitter and/or a transceiver, such as transceiver 1010 described above in relation to FIGURE 10. Communication module 1320 may include circuitry configured to wirelessly transmit messages and/or signals. In particular embodiments, communication module 1320 may receive messages and/or signals for transmission from determining module 1310 or any other module.

Receiving module 1330 may perform the receiving functions of network node 115. For example, receiving module 1330 may receive side information from a node, such as a wireless device. Receiving module 1330 may receive any suitable information from a wireless device. Receiving module 1330 may include a receiver and/or a transceiver. Receiving module 1330 may include circuitry configured to wirelessly receive messages and/or signals. In particular embodiments, receiving module 1330 may communicate received messages and/or signals to determining module 1310 or any other suitable module.

Determining module 1310, communication module 1320, and receiving module 1330 may include any suitable configuration of hardware and/or software. Network node 115 may include additional modules beyond those shown in FIGURE 13 that may be responsible for providing any suitable functionality, including any of the functionality described above and/or any additional functionality (including any functionality necessary to support the various solutions described herein).

The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Although this disclosure has been described in terms of certain embodiments, alterations and permutations of the embodiments will be apparent to those skilled in the art. Accordingly, the above description of the embodiments does not constrain this disclosure.

Abbreviations used in the preceding description include:
- BSM: Basic Safety Message
- BW: Bandwidth
- CAM: Cooperative Awareness Message
- D2D: Device-to-Device (Communication)
- DENM: Decentralized Environmental Notification Message
- DSRC: Dedicated Short-Range Communications
- eNB: eNodeB
- ETSI: European Telecommunications Standards Institute
- FDMA: Frequency-Division Multiple Access
- LTE: Long-Term Evolution
- MIB: Master Information Block
- NW: Network
- TDMA: Time-Division Multiple Access
- SAE: Society of the Automotive Engineers
- SIB: System Information Block
- UE: User Equipment
- V2I: Vehicle-to-Infrastructure (Communication)
- V2P: Vehicle-to-Pedestrian (Communication)
- V2V: Vehicle-to-vehicle (Communication)
- V2x: Vehicle-to-anything-you-can-imagine (Communication)

## Claims

1. A transmission method in a first wireless device (110), comprising the steps of:
obtaining (704) first control auxiliary information from a second wireless device (110), the first control auxiliary information comprising information about a resource allocation scheme used by the second wireless device (110), wherein the control auxiliary information is transmitted by the second wireless device to the first wireless device,
determining (708), based at least in part on the first control auxiliary information, one or more characteristics of the resource allocation scheme used by the second wireless device (110) by determining that one or more resources used by the second wireless device (110) were scheduled by a network node (115) using centralised resource allocation, wherein said determining (708) comprises predicting, based at least in part on the first control auxiliary information, the resources to be used by the second wireless device (110) at a future time instance,
adapting (712) a transmitter behavior of the first wireless device (110) based on the determined one or more characteristics of the resource allocation scheme used by the second wireless device (110) by avoiding transmitting on resources that would interfere with the one or more resources scheduled by the network node (115) using centralised resource allocation, and the method being **characterised by** the step of:
transmitting second control auxiliary information to at least the second wireless device (110), the second control auxiliary information comprising information about a resource allocation scheme used by the first wireless device (110).

2. The method of Claim 1, wherein the first control auxiliary information comprises one or more of:
an indication that one or more resources used by the second wireless device (110) were scheduled by a network node (115) using centralised resource allocation;
an indication of a resource allocation algorithm used by the second wireless device (110);
an indication of a resource pattern used by the second wireless device (110);
an indication that the second wireless device (110) uses one of a pre-defined set of resource patterns; and
an indication of one or more resources to be used by the second wireless device (110) for a subsequent transmission at a future time instance.

3. The method of any preceding Claim, wherein the first wireless device (110) comprises a vehicular device engaged in device-to-device communication with the second wireless device (110).

4. A first wireless device (110), comprising:
one or more processors (920), the one or more processors (920) configured to: perform the method as claimed in any one of claims 1 to 3.

## Patentansprüche

1. Übertragungsverfahren in einer ersten drahtlosen Vorrichtung (110), das die folgenden Schritte umfasst:
Erhalten (704) erster Steuerhilfsinformationen von einer zweiten drahtlosen Vorrichtung (110), wobei die ersten Steuerhilfsinformationen Informationen über ein Ressourcenzuweisungsschema, das durch die zweite drahtlose Vorrichtung (110) verwendet wird, umfassen, wobei die Steuerhilfsinformationen durch die zweite drahtlose Vorrichtung an die erste drahtlose Vorrichtung übertragen werden,
Bestimmen (708), wenigstens teilweise basierend auf den ersten Steuerhilfsinformationen, eines oder mehrerer Merkmale des Ressourcenzuweisungsschemas, das durch die zweite drahtlose Vorrichtung (110) verwendet wird, durch Bestimmen, dass eine oder mehrere Ressourcen, die durch die zweite drahtlose Vorrichtung (110) verwendet werden, durch einen Netzwerkknoten (115) unter Verwendung von zentralisierter Ressourcenzuweisung geplant wurden, wobei das Bestimmen (708) ein Vorhersagen, wenigstens teilweise basierend auf den ersten Steuerhilfsinformationen, der Ressourcen, die durch die zweite drahtlose Vorrichtung (110) zu einer zukünftigen Zeitinstanz verwendet werden sollen, umfasst,
Anpassen (712) eines Senderverhaltens der ersten drahtlosen Vorrichtung (110) basierend auf dem bestimmten einen oder den bestimmten mehreren Merkmalen des Ressourcenzuweisungsschemas, das durch die zweite drahtlose Vorrichtung (110) verwendet wird, durch Vermeiden von Übertragen auf Ressourcen, die die eine oder die mehreren Ressourcen stören würden, die durch den Netzwerkknoten (115) unter Verwendung von zentralisierter Ressourcenzuweisung geplant werden, und wobei das Verfahren durch die folgenden Schritte gekennzeichnet ist:
Übertragen von zweiten Steuerhilfsinformationen an wenigstens die zweite drahtlose Vorrichtung (110), wobei die zweiten Steuerhilfsinformationen Informationen über ein Ressourcenzuweisungsschema, das durch die erste drahtlose Vorrichtung (110) verwendet wird, umfassen.

2. Verfahren nach Anspruch 1, wobei die ersten Steuerhilfsinformationen Folgendes umfassen:
eine Angabe, dass eine oder mehrere Ressourcen, die durch die zweite drahtlose Vorrichtung (110) verwendet werden, durch einen Netzwerkknoten (115) unter Verwendung von zentralisierter Ressourcenzuweisung geplant wurden;
eine Angabe eines Ressourcenzuweisungsalgorithmus, der durch die zweite drahtlose Vorrichtung (110) verwendet wird;
eine Angabe eines Ressourcenmusters, das durch die zweite drahtlose Vorrichtung (110) verwendet wird;
eine Angabe, dass die zweite drahtlose Vorrichtung (110) eines aus einem vordefinierten Satz von Ressourcenmustern verwendet; und/oder
eine Angabe einer oder mehrerer Ressourcen, die durch die zweite drahtlose Vorrichtung (110) für eine nachfolgende Übertragung zu einer zukünftigen Zeitinstanz verwendet werden sollen.

3. Verfahren nach einem der vorhergehenden Ansprüche, wobei die erste drahtlose Vorrichtung (110) eine Fahrzeugvorrichtung umfasst, die in einer Vorrichtung-zu-Vorrichtung-Kommunikation mit der zweiten drahtlosen Vorrichtung (110) steht.

4. Erste drahtlose Vorrichtung (110), die Folgendes umfasst:
einen oder mehrere Prozessoren (920), wobei der eine oder die mehreren Prozessoren (920) für Folgendes konfiguriert sind:
das Verfahren nach einem der Ansprüche 1 bis 3 durchzuführen.

## Revendications

1. Procédé de transmission dans un premier dispositif sans fil (110), comprenant les étapes consistant à :
obtenir (704) des premières informations auxiliaires de commande à partir d'un second dispositif sans fil (110), les premières informations auxiliaires de commande comprenant des informations sur un schéma d'attribution de ressources utilisé par le second dispositif sans fil (110), dans lequel les informations auxiliaires de commande sont transmises par le second dispositif sans fil au premier dispositif sans fil,
déterminer (708), sur la base au moins en partie des premières informations auxiliaires de commande, une ou plusieurs caractéristiques du schéma d'attribution de ressources utilisé par le second dispositif sans fil (110) en déterminant qu'une ou plusieurs ressources utilisées par le second dispositif sans fil (110) ont été planifiées par un nœud de réseau (115) à l'aide d'une attribution de ressources centralisée, dans lequel ladite détermination (708) comprend la prédiction, sur la base au moins en partie des premières informations auxiliaires de commande, des ressources à utiliser par le second dispositif sans fil (110) à un moment ultérieur,
adapter (712) un comportement de transmetteur du premier dispositif sans fil (110) sur la base de la ou des caractéristiques déterminées du schéma d'attribution de ressources utilisé par le second dispositif sans fil (110) en évitant de transmettre sur des ressources qui interféreraient avec la ou les ressources planifiées par le nœud de réseau (115) à l'aide d'une attribution de ressources centralisée, et le procédé étant **caractérisé par** les étapes consistant à :
transmettre des secondes informations auxiliaires de commande à au moins le second dispositif sans fil (110), les secondes informations auxiliaires de commande comprenant des informations concernant un schéma d'attribution de ressources utilisé par le premier dispositif sans fil (110).

2. Procédé selon la revendication 1, dans lequel les premières informations auxiliaires de commande comprennent un ou plusieurs parmi :
une indication qu'une ou plusieurs ressources utilisées par le second dispositif sans fil (110) ont été planifiées par un nœud de réseau (115) à l'aide d'une attribution de ressources centralisée ;
une indication d'un algorithme d'attribution de ressources utilisé par le second dispositif sans fil (110) ;
une indication d'un modèle de ressource utilisé par le second dispositif sans fil (110) ;
une indication que le second dispositif sans fil (110) utilise l'un parmi un ensemble prédéfini de modèles de ressources ; et
une indication d'une ou de plusieurs ressources devant être utilisées par le second dispositif sans fil (110) pour une transmission ultérieure à un moment ultérieur.

3. Procédé selon l'une quelconque des revendications précédentes, dans lequel le premier dispositif sans fil (110) comprend un dispositif de véhicule qui vient prise avec le second dispositif sans fil (110) par une communication de dispositif à dispositif.

4. Un premier dispositif sans fil (110), comprenant :
un ou plusieurs processeurs (920), le ou les processeurs (920) étant configurés pour : mettre en œuvre le procédé selon l'une quelconque des revendications 1 à 3.
